# FASCICULE DE BREVET EUROPEEN

(11) **EP 0 748 592 B1**
(45) Date de publication et mention de la délivrance du brevet: **16.08.2001**
(21) Numéro de dépôt: 95201617.8
(22) Date de dépôt: 16.06.1995
(51) Int. Cl.: A23L 1/314, A23L 3/015, A23L 1/317

(54) **Pâté de viande à basse teneur en graisse**
Fettarme Fleischpaste
Low fat meat paste

(43) Date de publication de la demande: 18.12.1996
(73) Titulaire: SOCIETE DES PRODUITS NESTLE S.A., 1800 Vevey (CH)
(72) Inventeur: Mandava, Rao, CH-1800 Vevey (CH); Juillerat, Marcel Alexandre, CH-1000 Lausanne (CH); Fernandez, Isabel, CH-1010 Lausanne (CH)

(56) Documents cités:
- EP-A- 0 278 427
- EP-A- 0 632 963
- WO-A-94/22331
- US-A- 5 232 722
- PATENT ABSTRACTS OF JAPAN vol. 18 no. 71 (C-1162) ,7 Février 1994 & JP-A-05 284943 (SAN EI CHEM. IND. LTD.)
- DATABASE WPI Week 9528 Derwent Publications Ltd., London, GB; AN 95-211597 & JP-A-07 123 949 (MARUTO SANGYO KK ET AL.)
- DATABASE WPI Week 7742 Derwent Publications Ltd., London, GB; AN 77-74590y & JP-A-50 121 485 (TEIKOKUZOKI PHARM.) , 23 Septembre 1975
- FOOD SCIENCE AND TECHNOLOGY ABSTRACTS AN - 70(11):S1057 International Food Information Service Berkshire Reading, GB & CANADIAN PATENT 840944 (SWIFT AND CO), 1970

## Description

La présente invention concerne un procédé de préparation d'un pâté à basse teneur en graisse comprenant au moins de la viande, de l'eau, des sels et un substitut de la graisse.

### Etat de la technique

La demande de brevet WO 94/22331 décrit un procédé de préparation de produits à base de foie gras comprenant l'application d'une pression supérieure à 10⁸ Pa avec ou sans chauffage à une température comprise entre -10 et 120°C de manière à éviter la fonte lipidique et le développement de microorganismes pathogènes.

La demande de brevet EP 0 668 026 décrit un procédé dans lequel on applique à un mélange de viande pour saucisse, avant cuisson, une pression hydrostatique comprise entre 500 et 4000 00 kPa, de manière à améliorer le rendement à la cuisson de la saucisse et la fermeté de sa texture.

De même, EP278427 décrit un procédé de préparation d'un pâté de viande stérilisé, dans lequel on prépare une émulsion de viande, on la soumet à une digestion protéolytique par des protéases techniques, on la conditionne hermétiquement, puis on la soumet à une cuisson à l'ébullition. Le pâté obtenu par ce procédé présente ainsi une capacité d'étalement bien meilleure que celle de pâtés traditionnels stérilisés n'ayant pas subi une digestion protéolytique.

Cependant, la cuisson de l'émulsion à l'ébullition, c'est à dire à des températures proches de 100°C, entraîne une évaporation de l'eau de cette dernière qui induit une contraction de la texture finale du pâté, et donc une diminution de son aptitude à être étalé. De plus, il apparaît également clairement que la cuisson à l'ébullition de l'émulsion digérée est le seul moyen suffisant pour inactiver l'activité des protéases.

### Résumé de l'invention

La présente invention a pour objet un procédé de préparation d'un pâté de viande à basse teneur en graisse présentant une texture et une capacité d'étalement supérieure à celle de pâtés à basse teneur en graisse traditionnels, ladite texture et ladite capacité d'étalement étant conservées lors du stockage du pâté.

A cet effet, dans le procédé selon l'invention on prépare une émulsion de viande comprenant au moins de la viande, de l'eau, des sels et un substitut de la graisse, on soumet ladite émulsion à une digestion protéolytique, on la cuit à une température comprise entre 65 et 75°C, puis on la soumet à une pression hydrostatique supérieure à 400000 kPa à une température comprise entre -10 et 75°C pendant un temps adéquat pour obtenir moins de 4,5 unités de protéases par g de pâté.

D'une manière surprenante, les protéases d'une émulsion de viande ou d'un pâté, endogènes ou exogènes, peuvent être inactivées par le seul traitement à une haute pression hydrostatique sans le concours d'inhibiteurs de protéases ou d'une température élevée, par exemple. Un traitement à une pression hydrostatique supérieure à 400000 kPa peut ainsi inactiver plus de 97% de l'activité protéolytique initiale de l'émulsion.

D'une manière surprenante, une activité protéolytique résiduelle dans un pâté selon l'invention inférieure à 4,5 unités/g, n'est également pas suffisante pour entraîner un ramollissement indésirable du pâté au cours de son stockage. Ainsi, un pâté selon l'invention peut être conservé pendant au moins 60 jours sans que l'on observe une diminution de son aptitude à être étalé, ou une augmentation significative de son amertume

De plus, le pâté selon l'invention s'étale particulièrement bien dans l'assiette, et même s'étale mieux que des pâtés à basse teneur en graisse traditionnels, dans lesquels on a remplacé la graisse par un substitut de la graisse. En effet, les substituts de la graisse, comme l'amidon, les hydrocolloïdes, et des protéines animales ou végétales, par exemple, ne confèrent malheureusement pas à un pâté à basse teneur en graisse une aussi bonne aptitude à être étalé que celle conférée par la graisse.

De même, le présent procédé présente aussi l'avantage de ne pas entraîner une évaporation d'eau du pâté trop importante lors de la cuisson, ce qui induirait une contraction de la texture du pâté et donc une diminution de son aptitude à être étalé. En effet, une cuisson d'une émulsion selon l'invention à basse pression et à une température supérieure à 75°C notamment à 80°C, entraîne une contraction indésirable de la texture du pâté (voir chapitre "Exemples comparatifs").

De même, une cuisson d'une émulsion selon l'invention à haute pression (supérieure à 100000 kPa) et à 65-75°C entraîne aussi une contraction indésirable de la texture dudit pâté (voir chapitre "Exemples comparatifs"). Ces résultats confortent l'originalité du présent procédé, car en dissociant la cuisson et l'inactivation des protéases, on peut obtenir un pâté ayant une bonne aptitude à être étalé. De plus, d'une manière inattendue on peut aussi cuire une émulsion selon l'invention à 65-75°C (à basse pression) puis inactiver les protéases du pâté à haute pression et à une température de cuisson (jusqu'à 75°C) sans que le pâté ne présente une contraction indésirable de sa texture.

### Description détaillée de l'invention

Dans la suite de la description, l'expression "pâté à basse teneur en graisse" désigne les pâtés ayant une teneur totale en graisse inférieure à 10%. Ainsi, le présent pâté comprend de préférence 40 à 80% de viandes maigres broyées comprenant généralement 3-8% de graisse, 1 à 15% d'un substitut de la graisse, 15-50% d'eau ajouté, 1,2-2,4% de sels nitrités et jusqu'à 0,3% de phosphates.

De même, les pourcentages sont donnés en poids sauf indication contraire, ce qui signifie que la quantité des différents ingrédients sont donnés en poids par rapport au poids d'émulsion finale. De plus, la pression est données en pression absolue, une basse pression étant une pression inférieure à 100000 kPa, de préférence 100 à 500 kPa, et une haute pression étant une pression supérieure à 100000 kPa, de préférence supérieure à 400000 kPa. Enfin, les unités d'activité enzymatique des protéases sont données en µg de substrats transformés par min.

Pour mettre en oeuvre le présent procédé, on prépare donc une émulsion de viande à basse teneur en graisse comprenant au moins de la viande, de l'eau, des sels et au moins un substitut de la graisse. De préférence, cette émulsion comprend 40 à 80% de viandes maigres broyées finement, 15 à 50% d'eau, 1,2 à 2,4% de sels nitrités, jusqu'à 0,3% de phosphates, 1 à 15% d'au moins un substitut de la graisse et des épices comme par exemple du poivre, du gingembre, du coriandre et de l'acide ascorbique. Enfin, la préparation de cette émulsion peut être tout à fait traditionnelle, dans le sens où l'on peut mélanger dans un hacheur classique l'ensemble de ces constituants jusqu'à l'obtention d'une émulsion, par exemple.

Dans un deuxième temps, on soumet ladite émulsion à une digestion protéolytique. Les enzymes responsables de cette digestion peuvent être des protéases endogènes des tissus de la viande, que l'on active en soumettant l'émulsion à une température favorable à l'activité de ces protéases pendant un temps suffisant pour observer une libération quantifiable de peptides et d'acides aminés (quantifiable sur un gel de chromatographie classique, par exemple). On peut aussi prévoir d'incorporer à l'émulsion de viande des parties d'abats comprenant naturellement des protéases.

Cependant on préfère ajouter des protéases techniques à l'émulsion de viande, c'est à dire une préparation comprenant au moins un type de protéase, comme la papaine, la trypsine, la pancréatine de pancréas d'animaux, et également différentes protéases microbiennes provenant par exemple de *Bacillus subtilis*, et des protéases fongiques provenant par exemple *d'Aspergillus oryzae*, qui sont disponibles dans le commerce. Les protéases techniques peuvent être ajoutées lors de la préparation de l'émulsion, sous la forme d'un mélange d'une poudre ou d'une solution concentrée de protéase avec tout ou partie de l'eau qui est utilisée dans la préparation de l'émulsion, par exemple. On peut aussi prévoir de mélanger les protéases à de la glace, à la place de tout ou une partie de l'eau, de manière à refroidir l'émulsion et à pouvoir contrôler ainsi l'activité des protéases, par exemple. De cette manière, on soumet l'émulsion de viande à une digestion contrôlée par ces enzymes, de préférence pendant 10 à 120 min à une température favorable à l'activité des protéases, c'est à dire généralement à une température comprise entre 30 et 60°C.

Dans un troisième temps, on cuit l'émulsion de viande ainsi digérée à une température comprise entre 65 et 75°C. L'optimum de température de cuisson va alors dépendre de la composition de l'émulsion, et du système de cuisson en atmosphère sèche ou humide, par exemple. Cependant d'une manière générale, on préfère choisir une température de cuisson telle que le pâté final ne perdent pas plus de 5% d'eau par évaporation. Les températures de cuisson les plus couramment utilisées peuvent ainsi être comprises entre 68-72°C et être appliquées pendant 1 à 60 min, par exemple.

Il faut noter que la cuisson n'est pas suffisante pour inactiver l'activité des protéases. En effert, même une température de 80°C ne suffit pas à inactiver des protéases particulièrement résistantes. De plus, si on élève la température de cuisson au dessus de 75°C pour les inactiver suffisamment, on entraîne le plus souvent une évaporation d'eau excessive du pâté et une modification indésirable de sa texture.

Dans le présent procédé, on soumet alors l'émulsion cuite à une pression hydrostatique supérieure à 400000 kPa à une température comprise entre -10 et 75°C, pendant un temps adéquat pour obtenir moins de 4,5 unités de protéases par g de pâté, de préférence moins de 3,8 unités/g.

Il faut noter que les protéases selon leurs origines peuvent avoir des résistances tout à fait différentes à l'inactivation par la haute pression, et que l'intensité de la pression appliquée est inversement proportionelle à la durée de traitement. Cependant, d'une manière générale on peut inactiver suffisamment la plupart des protéases d'un pâté ou d'une émulsion à une pression hydrostatique supérieure à 400000 kPa mais de préférence supérieure à 500000 kPa, appliquée pendant 1 à 60 min, par exemple.

Enfin, pour appliquer la haute pression, il n'est pas nécéssaire d'utiliser des inhibiteurs ou des gaz particuliers. On applique à la matière alimentaire une pression hydrostatique, c'est-à-dire une pression transmise par un liquide. Pour cela, on peut isoler cette matière du liquide utilisé pour transmettre la haute pression, par exemple de l'eau ou de l'huile, par des moyens d'emballage de l'aliment sous vide notamment dans des récipients déformables en plastique ou en aluminium, par exemple. Ces récipients peuvent être ensuite placés dans une chambre d'un dispositif de haute pression dans laquelle on applique le traitement sous haute pression pendant un temps et à une température adéquats pour obtenir une inactivation des enzymes .

Le temps de traitement peut être supérieur à 30 min, et de préférence supérieur à 10 min. De plus, ce temps de traitement commence à partir du moment où l'on atteint la pression et la température désirées, le temps nécessaire pour atteindre ces valeurs étant en moyenne de l'ordre de 1 min, par exemple.

Dans un mode de mise en oeuvre particulier du présent procédé, on prépare ladite émulsion en broyant finement de la viande en présence de sels, tout en ajoutant de l'eau, une préparation comprenant au moins une protéase technique et ledit substitut de la graisse, on conditionne sous vide l'émulsion de viande ainsi obtenue, on soumet l'émulsion conditionnée à ladite digestion à une température favorable à l'activité des protéases, on cuit l'émulsion hydrolysée à une température comprise entre 65 et 75°C comme décrit ci-dessus, puis on la soumet à ladite haute pression hydrostatique, à une température comprise entre -10 et 75°C, avant de la déconditionner.

Le procédé selon la présente invention est décrit plus en détails dans les exemples présentés ci-après à titre d'illustration. Ces exemples sont précédés d'une description de deux tests permettant de mesurer l'activité d'une protéase, et la capacité d'étalement et l'amertume d'un pâté, ainsi que de quatre exemples comparatifs.

### Activité d'une protéase

On détermine l'activité d'une protéase, et notamment celle de la trypsine, à l'aide d'un kit "Protease gels tablet" (Biorad).

Pour cela, on dépose un échantillon d'émulsion ou de pâté de viande dans une cuvette d'un gel à 1% d'agarose comprenant de la caséine bovine préparées dans un tampon Tris à pH 7,2, on incube le gel pendant une nuit à 25°C, on mesure le diamètre de diffusion de la protéase caractérisé par un halo transparent autour de la cuvette résultant de la digestion de la caséine, puis on détermine l'activité de la protéase par rapport à une courbe standard établie par le même test et en même temps avec des échantillons de la même protéase ayant des unités d'activités enzymatiques connues.

Les résultats présentés dans les exemples ci-après sont donnés en unités de protéases résiduelles par g pâté par rapport aux unités initiales par g d'émulsion.

### Amertume et étalement d'un pâté

L'appréciation de l'amertume et l'aptitude à être étalé d'un pâté ont été déterminées par un panel d'une trentaine de personnes. Les essais ont été conduits en double et en aveugle de manière à obtenir des résultats reproductibles. Chaque personne a ainsi noté graduellement les caractéristiques d'un pâté entre 1 et 5. Les notes présentés dans les exemples ci-après résultent de la moyenne des notes données par chaque personne du panel.

Pour l'amertume, la valeur 1 signifie que le pâté est moins amer ou plus doux que les autres pâtés, tandis que la valeur 5 signifie le contraire. Les notes données aux pâtés conformes à la présente invention sont comprises entre 1 et 2,5.

Pour l'aptitude à l'étalement, la valeur 1 signifie que le pâté est plus ferme et moins étalable que les autres pâtés, tandis que la valeur 5 signifie que le pâté est plus tendre et plus étalable que les autres. Les notes données aux pâtés conformes à la présente invention sont comprises entre 2,3 et 3,1.

### Exemples comparatifs

On prépare des pâtés à basse teneur en graisse à partir d'une émulsion aqueuse de viande comprenant 60% de viandes maigres (5% de graisses animales), 18% de foie de porc, 17,5% de glace, 1,5% de sels nitrités, 0,3% de phosphates, 2% d'amidon, 0,7% d'épices et 30 mg/kg de trypsine (5100 unités/mg de trypsine).

Pour cela, on hache finement la viande en présence des sels et du phosphate dans un hachoir classique pendant 1 min, on ajoute de la glace et une préparation comprenant la trypsine dissoute dans de l'eau, on mélange jusqu'à ce que la température de l'émulsion atteigne 4°C, on ajoute l'amidon et les épices, et on mélange jusqu'à ce que la température de l'émulsion atteigne 14°C.

On réparti ensuite 50 à 100 g d'émulsion dans des sachets en plastique individuels, on scelle les sachets sous vide, on soumet ces sachets à une température de 42°C favorable à l'activité de la trypsine pendant 1 h, puis on mesure alors l'activité de la trypsine dans un des sachets par le test décrit ci-dessus.

On soumet une partie des sachets à une cuisson à 70°C pendant 30 min, une autre partie à une cuisson à 70°C pendant 60 min, une autre partie à une cuisson à 80°C pendant 60 min, et une autre partie à 700000 kPa à 70°C pendant 30 min.

Finalement, on conserve les pâtés à une température de réfrigération (5-12°C) pendant 60 jours, puis on détermine l'activité résiduelle de la trypsine, l'amertume et l'aptitude à l'étalement des pâtés par les test décrits ci-dessus. Les résultats sont présentés dans le tableau 1 ci-après.

**Tableau 1**

| Exemple comparatif: cuisson | unités résiduelle /g de pâté (60 jours) | Amertume (60 jours) | Etalement (60 jours) |
|---|---|---|---|
| 1: 70°C / 30 min | 25,4 | 3,5 (amer) | 3,6 (tendre) |
| 2: 70°C / 60 min | 9,9 | 2,9 | 3,2 |
| 3: 80°C / 60 min | 2,2 | 1,5 | 2,2 |
| 4: 70°C / 30 min / 7000 00 kPa | 1,7 | 2,1 (doux) | 1,0 (ferme) |
| (Pâtés appréciés: amertume 1-2,5; étalement 2,3-3,1) | | | |

Comme on peut le voir, les pâtés cuits à pression atmosphérique à 70°C présentent une activité résiduelle de la trypsine supérieure à 3% de celle initialement présente dans l'émulsion. Cette activité à entraîné une hydrolyse poussée des protéines, ce qui a conduit après 60 jours de conservation à trop ramollir les pâtés et à les rendre amer (les petits peptides confèrent l'amertume).

En outre, les pâtés cuits à pression atmosphérique à 80°C ou à 700000 kPa à 70°C présentent une activité résiduelle de la trypsine inférieure à 3% de celle initialement présente dans l'émulsion. Cette activité est insuffisante pour rendre le pâté amer et pour y entraîner après 60 jours de conservation un ramollissement excessif. Néanmoins, les deux types de cuisson ont entraîné une contraction de la texture final du pâté, due probablement à une dénaturation excessive des protéines, ce qui a conduit les pâtés à être trop ferme par rapport aux pâtés selon la présente invention.

### Exemples 1 et 2

On prépare deux pâtés de viande à partir d'une émulsion de viande comprenant 60% de viandes maigres (5% de graisses animales), 18% de foie de porc, 17,5% de glace, 1,5% de sels nitrités, 0,3% de phosphates, 2% d'amidon, 0,7% d'épices et 30mg/kg de trypsine (5100 unités/mg de trypsine)

Pour cela, on hache finement la viande en présence des sels et du phosphate dans un hachoir classique pendant 1 min, on ajoute toute la glace et une préparation comprenant la trypsine dissoute dans le reste de l'eau, on mélange jusqu'à ce que la température de l'émulsion atteigne 4°C, on ajoute ensuite l'amidon et les épices, et on mélange jusqu'à ce que la température de l'émulsion atteigne 14°C.

On répartit alors 50 à 100 g d'émulsion dans des sachets en plastique individuels, on scelle les sachets sous vide, on soumet ces sachets à une température de 42°C favorable à l'activité de la trypsine pendant 1 h, puis on mesure l'activité de la trypsine dans l'émulsion par le test décrit ci-dessus.

Dans le premier exemple, on cuit une partie des sachets à une température de 70°C pendant 30 min, on les soumet à une pression hydrostatique de 500000 kPa pendant 10 min à une température de 75°C, on conserve le pâté pendant 60 jours à une température de réfrigération, puis on détermine l'activité résiduelle de la trypsine, l'amertume et l'aptitude à être étalé des pâtés par les tests décrits ci-dessus. Les résultats sont présentés dans le tableau 2 ci-après.

Dans le deuxième exemple, on cuit une partie des sachets à une température de 70°C pendant 30 min, on les soumet à une pression hydrostatique de 700000 kPa pendant 10 min à une température de 60°C, on conserve le pâté pendant 60 jours à une température de réfrigération, puis on détermine l'activité résiduelle de la trypsine, l'amertume et l'aptitude à être étalé des pâtés par les tests décrits ci-dessus. Les résultats sont présentés dans le tableau 2 ci-après.

**Tableau 2**

| Exemple | unités d'activité/g de pâté (60 jours) | Amertume (60 jours) | Etalement 60 (jours) |
|---|---|---|---|
| 1 | 3,8 | 2,1 | 2,3 |
| 2 | 1,8 | 2 | 2,5 |
| (Pâtés appréciés: amertume 1-2,5; étalement 2,3-3,1) | | | |

Ces résultats confirment qu'une émulsion de viande à basse teneur en graisse hydrolysée enzymatiquement, cuite et inactivée à haute pression, donne un pâté ayant une douceur en bouche et une aptitude à être étalé particulièrement appréciées des dégustateurs.

## Revendications

1. Procédé de préparation d'un pâté de viande à basse teneur en graisse, dans lequel on prépare une émulsion de viande comprenant au moins de la viande, de l'eau, des sels et un substitut de la graisse, on soumet ladite émulsion à une digestion protéolytique, puis on la cuit à une température comprise entre 65 et 75°C, et on la soumet à une pression hydrostatique supérieure à 400000 kPa à une température comprise entre -10 et 75°C pendant un temps adéquat pour obtenir moins de 4,5 unités de protéases par g de pâté.

2. Procédé selon la revendication 1, dans lequel la digestion protéolytique est effectuée par des protéases endogènes de la viande ou par au moins une protéase technique.

3. Procédé selon la revendication 2, dans lequel on prépare une émulsion en broyant finement de la viande en présence de sels, tout en ajoutant de l'eau et/ou de la glace, une préparation comprenant au moins une protéase technique et ledit substitut de la graisse, on conditionne sous vide l'émulsion de viande ainsi obtenue, on soumet l'émulsion conditionnée à une digestion protéolytique à une température favorable à l'activité de protéases, on cuit l'émulsion hydrolysée à une température comprise entre 65 et 75°C, puis on la soumet à une pression hydrostatique supérieure à 400000 kPa à une température comprise entre -10 et 75°C.

4. Procédé selon la revendication 3, dans lequel une pression hydrostatique supérieure à 400000 kPa est appliquée pendant 1 à 60 min.

5. Procédé selon la revendication 3, dans lequel la température de cuisson est comprise entre 68 et 72°C.

6. Procédé selon la revendication 3, dans lequel on soumet l'émulsion à la digestion par des protéases techniques, pendant 10 à 120 min, à une température favorable à l'activité des protéases.

7. Procédé selon la revendication 1, dans lequel l'émulsion comprend 40 à 80% de viandes broyées finement, 15 à 50% d'eau et/ou de glace, 1,2 à 2,4% de sels nitrités, jusqu'à 0,3% de phosphates, et 1 à 15% d'au moins un substitut de la graisse.

8. Procédé selon la revendication 1, dans lequel on utilise un substitut de la graisse choisi dans le groupe formé par l'amidon, des protéines végétales ou animales et des hydrocolloïdes.

## Claims

1. Process for preparing a meat pâté with a low fat content, wherein a meat emulsion is prepared comprising at least meat, water, salts and fat substitute, the said emulsion is subjected to proteolytic digestion, is then cooked at a temperature of between 65 and 75°C, and is subjected to a hydrostatic pressure greater than 400,000 kPa at a temperature of between -10 and 75°C for a time sufficient to obtain less than 4.5 protease units per g of pâté.

2. Process according to claim 1, wherein proteolytic digestion is carried out by the endogenous proteases of the meat or by at least one technical protease.

3. Process according to claim 2, wherein an emulsion is prepared by finely grinding meat in the presence of salts whilst adding water and/or ice, a preparation containing at least one technical protease and the said fat substitute, the meat emulsion thus obtained is conditioned, the conditioned emulsion is subjected under vacuum to proteolytic digestion at a temperature favourable to the activity of proteases, the hydrolysed emulsion is cooked at a temperature of between 65 and 75°C and is then subjected to a hydrostatic pressure greater than 400,000 kPa at a temperature of between -10 and 75°C.

4. Process according to claim 3, wherein a hydrostatic pressure greater than 400,000 kPa is applied for 1 to 60 min.

5. Process according to claim 3, wherein the cooking temperature is between 68 and 72°C.

6. Process according to claim 3, wherein the emulsion is subjected to digestion by technical proteases for 10 to 120 min at a temperature favourable to the activity of the proteases.

7. Process according to claim 1, wherein the emulsion comprises 40 to 80 % finely ground meat, 15 to 50 % water and/or ice, 1.2 to 2.4 % nitrated salts, up to 0.3 % phosphates, and 1 to 15 % of at least one fat substitute.

8. Process according to claim 1, wherein a fat substitute is used chosen from the group consisting of starch, vegetable or animal proteins and hydrocolloids.

## Patentansprüche

1. Verfahren zur Herstellung einer fettarmen Fleischpaste, bei dem man eine Fleischemulsion herstellt, die mindestens Fleisch, Wasser, Salze und einen Fettersatz enthält, diese Emulsion einem proteolytischen Abbau unterzieht, sie daraufhin bei einer Temperatur zwischen 65 und 75°C gart und sie einem hydrostatischen Druck über 400000 kPa aussetzt, und zwar bei einer Temperatur zwischen -10 und 75°C und für eine solche Zeit, dass weniger als 4,5 Proteaseeinheiten pro g Paste erhalten werden.

2. Verfahren nach Anspruch 1, bei dem der proteolytische Abbau durch endogene Proteasen des Fleisches oder durch mindestens eine technische Protease bewirkt wird.

3. Verfahren nach Anspruch 2, bei dem eine Emulsion hergestellt wird, indem Fleisch in Gegenwart von Salzen fein gemahlen wird, wobei Wasser und/oder Eis, ein mindestens eine technische Protease enthaltendes Präparat und der Fettersatz beigegeben werden, die auf diese Weise erhaltene Fleischemulsion unter Vakuum abgepackt wird, die abgepackte Emulsion bei einer für die Proteasenaktivität günstigen Temperatur einem proteolytischen Abbau unterzogen wird, die hydrolysierte Emulsion bei einer Temperatur zwischen 65 und 75°C gegart wird und dann bei einer Temperatur zwischen -10 und 75°C einem hydrostatischen Druck über 400000 kPa ausgesetzt wird.

4. Verfahren nach Anspruch 3, bei dem ein hydrostatischer Druck über 400000 kPa während 1 bis 60 min ausgeübt wird.

5. Verfahren nach Anspruch 3, bei dem die Garungstemperatur zwischen 68 und 72°C beträgt.

6. Verfahren nach Anspruch 3, bei dem die Emulsion dem Abbau durch technische Proteasen während 10 bis 120 min bei einer für die Proteasenaktivität günstigen Temperatur unterzogen wird.

7. Verfahren nach Anspruch 1, bei dem die Emulsion 40 bis 80% fein gemahlenes Fleisch, 15 bis 50% Wasser und/oder Eis, 1,2 bis 2,4% Nitritsalze, bis zu 0,3% Phosphate und 1 bis 15% mindestens eines Fettersatzes enthält.

8. Verfahren nach Anspruch 1, bei dem man einen Fettersatz verwendet, der aus der Gruppe ausgewählt ist, die aus Stärke, pflanzlichen oder tierischen Proteinen und Hydrokolloiden besteht.
